# EUROPEAN PATENT APPLICATION

(11) **EP 4 357 129 A1**
(43) Date of publication of application: **24.04.2024**
(21) Application number: 22825027.0
(22) Date of filing: 15.06.2022
(51) Int. Cl.: B32B 27/00, B32B 27/32, C09J 109/06, C09J 123/26, C08J 5/18, C09J 7/24, C09J 7/30, B29C 48/08, B29C 48/154, B29C 48/21, B29C 48/395

(54) **ADHESIVE FILM AND METHOD FOR PRODUCING ADHESIVE FILM**

(30) Priority: 16.06.2021 JP 2021100064
(71) Applicant: Fujimori Kogyo Co., Ltd., Tokyo 112-0002 (JP)
(72) Inventor: TAKEI Kunihiro, Tokyo 112-0002 (JP); YOSHIKAWA Yuiko, Tokyo 112-0002 (JP)
(74) Representative: Lavoix
(86) International application number: PCT/JP2022/023949
(87) International publication number: WO 2022/265039

(57) **Abstract**

The present invention provides an adhesive film 10 having an adhesive layer 12 on at least one surface of a heat-resistant layer 11, in which the heat-resistant layer 11 contains a thermoplastic resin having an aromatic ring in a monomer unit as an essential component, a heat deflection temperature of the heat-resistant layer 11 is 100°C or higher, and the adhesive layer 12 contains a modified polyolefin resin as an essential component and, furthermore, contains at least one resin having a styrene structure or a cyclic hydrocarbon structure.

## Description

### [Technical Field]

The present invention relates to an adhesive film and a method for producing an adhesive film.

Priority is claimed on Japanese Patent Application No. 2021-100064, filed June 16, 2021, the content of which is incorporated herein by reference.

### [Background Art]

As highly heat-resistant materials, for example, polyimides are known. For example, Patent Document 1 describes an adhesive tape for an electronic component in which a base material and adhesive layers on both surfaces are formed of a specific polyimide. In addition, in paragraphs 0110 and 0111 of Patent Document 1, it is described that a semiconductor package is assembled by causing an adhesive tape of an example to adhere to a metal plane by one-second heating and then adhere to a lead frame by one-second heating and, furthermore, causing a semiconductor chip to adhere thereto by curing a silver paste for two hours.

### [Citation List]

### [Patent Document]

[Patent Document 1]
Japanese Patent No. 3839887

### [Summary of Invention]

### [Technical Problem]

For adhesive films that are heated to a high temperature to perform adhesion, there is a demand for adhesiveness to adherends and dimension retentiveness of the adhesive films. The invention described in Patent Document 1 is used as a thermoplastic adhesive (paragraph 0029) and described is highly heat-resistant and adhesive (paragraph 0118). However, in the invention described in Patent Document 1, since there is a need to use a special polyimide for the base material and the adhesive layers, the adhesive film becomes expensive.

The present invention has been made in consideration of the above-described circumstance, and an object of the present invention is to provide an adhesive film capable of satisfying both adhesiveness to adherends and dimension retentiveness of the adhesive film even at high temperatures and a method for producing an adhesive film.

### [Solution to Problem]

In order to achieve the above-described technical probrem, the present invention provides an adhesive film having an adhesive layer on at least one surface of a heat-resistant layer, in which the heat-resistant layer contains a thermoplastic resin having an aromatic ring in a monomer unit as an essential component, a heat deflection temperature of the heat-resistant layer is 100°C or higher, and the adhesive layer contains a modified polyolefin resin as an essential component and, furthermore, contains at least one resin having a styrene structure or a cyclic hydrocarbon structure.

A total of 3 to 50 parts by weight of the at least one resin having a styrene structure or a cyclic hydrocarbon structure may be contained in 100 parts by weight of the adhesive layer.

The modified polyolefin resin in the adhesive layer may be modified with an unsaturated carboxylic acid component, and 0.01 to 2 parts by weight of the unsaturated carboxylic acid component may be contained in 100 parts by weight of the modified polyolefin resin.

A thermoplastic resin other than the thermoplastic resin having an aromatic ring in a monomer unit may be contained in 100 parts by weight of the heat-resistant layer to an extent of 1 to 30 parts by weight.

The modified polyolefin resin may be a modified polyethylene resin or a modified polypropylene resin.

A thermoplastic elastomer resin may be contained in 100 parts by weight of the adhesive layer to an extent of 1 to 30 parts by weight.

A second adhesive layer that is caused to adhere to an adherend of the adhesive film may be provided on the adhesive layer.

In addition, the present invention provides a method for producing an adhesive film having a step of melt-kneading a material of the heat-resistant layer with a melt extruder and making the heat-resistant layer into a film by extrusion molding and a step of melt-kneading a material of the adhesive layer with the melt extruder and laminating the adhesive layer on at least one surface of the heat-resistant layer by extrusion lamination.

In addition, the present invention provides a method for producing an adhesive film having a step of melt-kneading individual materials of the heat-resistant layer and the adhesive layer with an extruder and extrusion-molding the materials at the same time to make the heat-resistant layer and the adhesive layer into a film in a state where the adhesive layer is laminated on at least one surface of the heat-resistant layer.

In addition, the present invention provides a method for producing an adhesive film having a step of melt-kneading a material of the heat-resistant layer with an extruder and making the heat-resistant layer into a film by extrusion molding, a step of melt-kneading a material of the adhesive layer with the extruder and making the adhesive layer into a film by extrusion molding, and a step of laminating the adhesive layer on at least one surface of the heat-resistant layer by pressing with a heat roll.

In addition, the present invention provides a method for producing an adhesive film having a step of melt-kneading a material of the heat-resistant layer with an extruder and making the heat-resistant layer into a film by extrusion molding and a step of dissolving a material of the adhesive layer in a solvent, applying the material onto the heat-resistant layer, and drying the solvent to laminate the adhesive layer.

### [Advantageous Effects of Invention]

According to the present invention, it is possible to satisfy both adhesiveness to adherends and dimension retentiveness of adhesive films even at high temperatures.

### [Brief Description of Drawings]

FIG. 1 is a cross-sectional view showing a first embodiment of an adhesive film.
FIG. 2 is a cross-sectional view showing a second embodiment of the adhesive film.
FIG. 3 is a cross-sectional view showing a third embodiment of the adhesive film.

### [Description of Embodiments]

Hereinafter, the present invention will be described based on preferable embodiments.

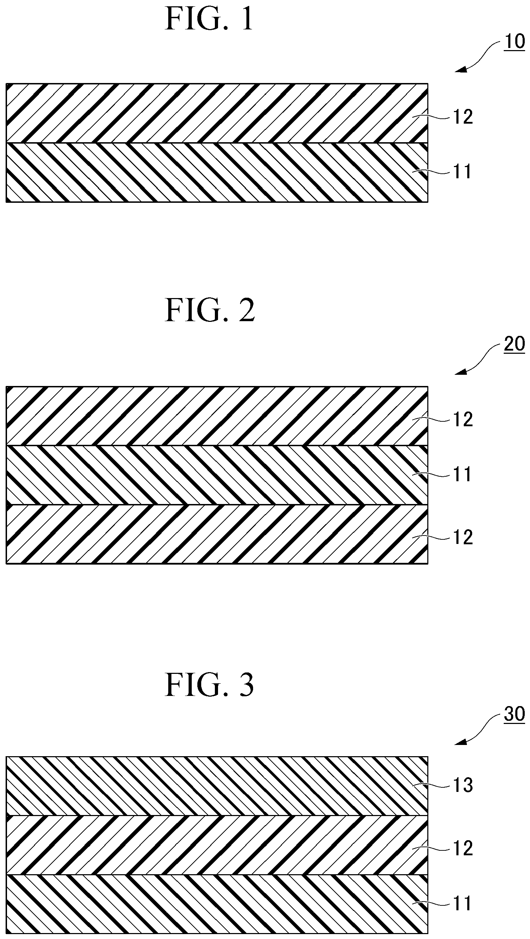

As shown in FIGS. 1 to 3, adhesive films 10, 20 and 30 of the embodiments have an adhesive layer 12 on at least one surface of a heat-resistant layer 11. In the adhesive film 10 shown in FIG. 1, the adhesive layer 12 may be provided on one surface of the heat-resistant layer 11. In the adhesive film 20 shown in FIG. 2, the adhesive layers 12 may be provided on both surfaces of the heat-resistant layer 11. These adhesive layers 12 may be used for adhesion to adherends (not shown) of the adhesive films 10 and 20.

In the adhesive film 30 shown in FIG. 3, a second adhesive layer 13, which is caused to adhere to an adherend, may be provided on the adhesive layers 12. The second adhesive layer 13 can be laminated on the adhesive layer 12 on at least one surface of the heat-resistant layer 11. While not particularly shown in the drawings, the adhesive layer 12 and the second adhesive layer 13 may be each laminated on both surfaces of the heat-resistant layer 11.

The heat-resistant layer 11 contains a thermoplastic resin having an aromatic ring in a monomer unit as an essential component. In the following description, "thermoplastic resin having an aromatic ring in a monomer unit as an essential component" will be referred to as "aromatic ring-containing thermoplastic resin" as a generic term in some cases.

Examples of the aromatic ring-containing thermoplastic resin include a polyimide (PI) resin, a polyphenylene sulfide (PPS) resin, a polyphenylene ether (PPE) resin, a polyamide-imide (PAI) resin, a polystyrene (PS) resin, a polyester resin, a bisphenol-type epoxy resin (phenoxy resin), a polyethersulfone (PES) resin, a polyether ether ketone (PEEK) resin, a polyetherimide (PEI) resin and the like. The aromatic ring-containing thermoplastic resin may be a polymer alloy in which two or more resins are blended together or the like. Examples of the polyester resin include a polyethylene terephthalate (PET) resin, a polybutylene terephthalate (PBT) resin, a polyethylene naphthalate (PEN) resin, an LCD polymer (LCP) and the like.

The aromatic ring in the aromatic ring-containing thermoplastic resin is not particularly limited, and examples thereof include a benzene ring, a naphthalene ring, an anthracene ring, a phenanthrene ring, an azulene ring and the like. These aromatic rings may be directly connected with each other by a single bond or the like. For example, when benzene rings are connected with each other by a single bond, a biphenyl ring, a terphenyl ring or the like is obtained. The aromatic ring-containing thermoplastic resin has the aromatic ring in a main chain that is repeated by the polymerization of a monomer.

In the aromatic ring-containing thermoplastic resin, one or more selected from an imide bond ((-CO)₂N-], a sulfide bond (-S-), an ether bond (-O-), an amide bond (-NHCO-), an ester bond (-COO-), a sulfone bond (-SO₂-), a carbonyl group (-CO-) and the like are preferably present between the aromatic rings that are included in the monomer unit. Furthermore, in order to improve the heat resistance in a high-humidity environment, the aromatic ring-containing thermoplastic resin preferably does not have a more hydrolysable or thermally decomposable bond and, for example, preferably does not have an ester bond. Furthermore, as the aromatic ring-containing thermoplastic resin, a thermoplastic resin having neither an ester bond nor an imide bond and/or an amide bond may be selected.

An aliphatic chain may be included between the aromatic rings in the aromatic ring-containing thermoplastic resin. Specific examples of the aliphatic chain include alkylene groups such as a methylene group (-CH₂-), an ethylene group (-CH₂CH₂-) and a trimethylene group (-CH₂CH₂CH₂-), substituted alkylene groups that are the above-described alkylene groups having one or more alkyl groups, hydroxyl groups or the like as substituents, divalent groups having a functional group such as an ether bond (-O-) or an ester bond (-COO-) at one end or both ends of an unsubstituted or substituted alkylene group and the like. Since aliphatic chains tend to be less heat-resistant than aromatic rings, the number of carbon atoms in the aliphatic chain that is disposed between the aromatic rings is preferably as small as possible. For example, the number of carbon atoms in the aliphatic chain may be three or less, two or less or one or less. An aromatic ring-containing thermoplastic resin having no aliphatic chains between the aromatic rings may also be employed.

The aromatic ring-containing thermoplastic resin is preferably a resin in which the number of aromatic rings in the monomer unit is a total of one to five. In such a case, the molecular structure of the resin does not become excessively complex, and the procurement becomes relatively easy. The number of aromatic rings means the number of "rings that configure a cyclic conjugated system." For example, the number of the above-described naphthalene rings or the biphenyl rings is one per structure. In addition, in a case where the aromatic ring-containing thermoplastic resin is a polymer of two or more monomers, for example, if the two monomers each have an aromatic ring, the aromatic ring-containing thermoplastic resin is considered as a resin in which the monomer unit has a total of two aromatic rings.

Examples of a resin having one aromatic ring in the monomer unit include a PI resin, a PPS resin, a PPE resin, a PAI resin, a PET resin, a PS resin, a PEN resin, LCP and the like. Examples of a resin having two aromatic rings in the monomer unit include a PI resin, a PAI resin, a PES resin, LCP and the like. Examples of a resin having three aromatic rings in the monomer unit include a PI resin, a PEEK resin, LCP and the like. Examples of a resin having five aromatic rings in the monomer unit include a PEI resin and the like.

The monomer unit of the aromatic ring-containing thermoplastic resin may be a unit that is repeated by the polymerization of a monomer. For example, in the case of a polymer that is obtained by the polycondensation of a polycarboxylic acid and a compound having other functional groups as shown in a polyimide resin, a polyester resin or the like, the unit of the polycarboxylic acid and the unit of the compound having other functional groups may be each the monomer unit or a unit obtained by combining the unit of the polycarboxylic acid and the unit of the compound having other functional groups may be the monomer unit. Here, the compound having other functional groups is a polyamine compound with respect to a polyimide resin and a polyol compound with respect to a polyester resin. Therefore, for example, in a polyimide resin, in a case where the unit of a polycarboxylic acid has one aromatic ring and the unit of a polyamine compound has two aromatic rings, the monomer unit may have three aromatic rings in the resin.

The heat-resistant layer 11 preferably has a heat deflection temperature (HDT) of 100°C or higher. The HDT of the heat-resistant layer 11 is more preferably 120°C or higher and still more preferably 140°C or higher. In addition, the HDT of the heat-resistant layer 11 is preferably 260°C or lower, more preferably 200°C or lower, still more preferably 180°C or lower and even more preferably 170°C or lower. In such a case, it is possible to improve the heat resistance of the adhesive films 10, 20 and 30. The HDT of the heat-resistant layer 11 can be measured by a method compliant with the standards of JIS K 7191, ISO 75, ASTM D648 or the like. The magnitude of the load in the HDT measurement is, for example, 1.80 MPa in the A methods of ISO 75 and JIS K 7191 and 1.82 MPa in the A method of ASTM D648.

The value of the heat deflection temperature (HDT) can be measured by fabricating a test piece for any of a single resin layer, a resin mixture layer containing two or more resins or a resin layer containing a component that is not a resin. Therefore, the HDT of a resin component that is in the heat-resistant layer 11 can also be measured. The aromatic ring-containing thermoplastic resin having an HDT of 100°C or higher is a preferable component for imparting heat resistance to the heat-resistant layer 11 and is thus preferably contained as an essential component. The HDT of a polymer alloy in which two or more resins are blended together and which is contained in the heat-resistant layer 11 may be 100°C or higher.

The heat-resistant layer 11 may contain only the aromatic ring-containing thermoplastic resin having an HDT of 100°C or higher as the resin component. The heat-resistant layer 11 may contain a resin component other than the aromatic ring-containing thermoplastic resin. The heat-resistant layer 11 may contain one or more aromatic ring-containing thermoplastic resins in a proportion of a total of 50 wt% or more, furthermore, 70 to 100 wt%. The heat-resistant layer 11 may be formed of only a heat-resistant layer containing the aromatic ring-containing thermoplastic resin, or a heat-resistant layer containing the aromatic ring-containing thermoplastic resin and another resin layer may be jointly used.

The heat-resistant layer 11 may contain a thermoplastic resin other than the aromatic ring-containing thermoplastic resin to an extent of 1 to 30 parts by weight, 1 to 25 parts by weight or 1 to 20 parts by weight in 100 parts by weight of the total amount of the heat-resistant layer. The thermoplastic resin other than the aromatic ring-containing thermoplastic resin may be a thermoplastic resin having no aromatic rings in the monomer unit. The HDT of the thermoplastic resin other than the aromatic ring-containing thermoplastic resin may be 100°C or higher or may be lower than 100°C.

Examples of the thermoplastic resin other than the aromatic ring-containing thermoplastic resin include resins obtained by polymerizing a monomer having the structure of at least any of ethylene, styrene, cyclic hydrocarbon or the like. The thermoplastic resin other than the aromatic ring-containing thermoplastic resin may be a resin obtained by copolymerizing at least one monomer selected from a monomer having an ethylene structure, a monomer having a styrene structure and a monomer having a cyclic hydrocarbon structure or may be a homopolymer of these monomers.

Examples of the monomer having an ethylene structure include ethylene, propylene, 1-butene, 1-pentene, 1-hexene, 1-heptene, 1-octene, butadiene, isoprene and the like. Examples of a resin obtained by polymerizing these monomers having an ethylene structure include polyolefins such as polyethylene and polypropylene.

Examples of the monomer having a styrene structure include styrene-based monomers such as styrene, methylstyrene and vinyltoluene. Examples of a resin obtained by polymerizing these monomers having a styrene structure include polystyrene, styrene-based elastomers and the like. Examples of the styrene-based elastomers include one or more of a styrene-ethylene-propylene-styrene block copolymer (SEPS), a styrene-ethylene-butylene-styrene block copolymer (SEBS), a styrene-butadiene-styrene block copolymer (SBS), a styrene-isoprene-styrene block copolymer (SIS), a styrene-isoprene-butadiene-styrene block copolymer (SIBS), a styrene-ethylene-butylene-olefin crystal block copolymer (SEBC), hydrogenated styrene-butadiene rubber (HSBR) and the like.

The monomer having a cyclic hydrocarbon structure may be the above-described monomer having a styrene structure, may be an aromatic olefin monomer such as indene or may be a cyclic olefin monomer. A resin obtained by polymerizing the monomer having a cyclic hydrocarbon structure may be, for example, a C5-C9 petroleum resin, a C9 petroleum resin or the like. The cyclic olefin monomer is preferably a monomer having at least one norbornene structure. The cyclic olefin monomer may be a hydrocarbon-based monomer or may have a functional group such as an ester group. Examples of a resin obtained by polymerizing the cyclic olefin monomer include cyclic olefin resins such as a cycloolefin polymer (COP) and a cycloolefin copolymer (COC).

The adhesive layer 12 contains a modified polyolefin resin as an essential component and, furthermore, contains at least one resin having a styrene structure or a cyclic hydrocarbon structure. The adhesive layer 12 may be a resin layer that is adjacent to the heat-resistant layer 11. The modified polyolefin resin is highly adhesive and thus becomes an essential component for imparting adhesiveness to the adhesive layer 12.

Examples of the modified polyolefin resin that is used in the adhesive layer 12 include one or more of an acid-modified polyolefin resin, a hydroxy-modified polyolefin resin, a chlorinated polyolefin resin and the like. Among these, an acid-modified polyolefin resin modified with an unsaturated carboxylic acid component is preferable. The modified polyolefin resin in the adhesive layer 12 preferably contains the unsaturated carboxylic acid component in a proportion of 0.01 to 2 parts by weight in 100 parts by weight of the modified polyolefin resin.

The unsaturated carboxylic acid component may be a carboxy group-containing monomer having a free carboxylic acid group or may be an acid anhydride group-containing monomer having a latent carboxylic acid group or the like. Examples of the carboxy group-containing monomer include α,β-unsaturated carboxylic acid monomers such as acrylic acid, methacrylic acid, maleic acid, nadic acid, fumaric acid, itaconic acid, citraconic acid, crotonic acid, isocrotonic acid, tetrahydrophthalic acid and endo-bicyclo[2.2.1]-5-heptene-2,3-dicarboxylic acid (endic acid). Examples of the acid anhydride group-containing monomer include unsaturated dicarboxylic anhydride monomers such as maleic anhydride, nadic anhydride, itaconic anhydride, citraconic anhydride and endic anhydride. The modified polyolefin resin may be a resin in which one unsaturated carboxylic acid component is copolymerized or a resin in which two or more unsaturated carboxylic acid components are copolymerized.

Examples of a method for producing the modified polyolefin resin include a method in which an unmodified polyolefin resin and a functional group-containing monomer are graft-modified by melt-kneading and a method in which an olefin monomer and a functional group-containing monomer are copolymerized. The functional group-containing monomer is a monomer having a polar functional group other than olefins, and examples thereof include unsaturated carboxylic acid components, hydroxy-substituted olefins, chlorinated olefins and the like. It is also possible to employ an acid-modified polyolefin resin by the graft modification of an unsaturated carboxylic acid component using a radical polymerization initiator as at least a part of the modified polyolefin resin. Examples of the radical polymerization initiator include organic peroxides, aliphatic azo compounds and the like.

Examples of the olefin monomer that is used in the modified polyolefin resin include one or more of ethylene, propylene, 1-butene, isobutylene, 1-hexene, 1-octene, α-olefin and the like. The modified polyolefin resin may be a modified polyethylene resin, a modified polypropylene resin, a modified poly-1-butene resin, a modified polyisobutylene resin or the like. One modified polyolefin may be used or two or more modified polyolefins may be jointly used. Examples of the unmodified polyolefin resin that is used for the graft modification of the modified polyolefin include polyethylene, polypropylene, poly-1-butylene, polyisobutylene, a random copolymer of propylene and ethylene or α -olefin, a block copolymer of propylene and ethylene or α-olefin and the like.

The modified polyethylene resin that is used in the adhesive layer 12 is preferably a resin containing 50 parts by weight or more of ethylene copolymerized with 100 parts by weight of a modified polyethylene resin. A functional group-containing monomer such as an unsaturated carboxylic acid component is copolymerized into the modified polyolefin resin. Furthermore, propylene, 1-butene, 1-hexene, 1-octene or the like may be copolymerized with the modified polyethylene resin as an olefin monomer other than ethylene.

The modified polypropylene resin that is used in the adhesive layer 12 is preferably a resin containing 50 parts by weight or more of polypropylene copolymerized with 100 parts by weight of a modified polypropylene resin. A functional group-containing monomer such as an unsaturated carboxylic acid component is copolymerized into the modified polypropylene resin. Furthermore, ethylene, 1-butene, 1-hexene, 1-octene or the like may be copolymerized with the modified polypropylene resin as an olefin monomer other than propylene.

The adhesive layer 12 contains at least one resin having a styrene structure or a cyclic hydrocarbon structure in addition to the modified polyolefin resin. This makes it possible to improve the adhesiveness between the heat-resistant layer 11 and the adhesive layer 12. The adhesive layer 12 preferably contains 3 to 50 parts by weight, more preferably contains 3 to 40 parts by weight, still more preferably contains 5 to 40 parts by weight and even more preferably contains 5 to 30 parts by weight of at least one resin having a styrene structure or a cyclic hydrocarbon structure in 100 parts by weight of the total amount of the adhesive layer 12.

Examples of the resin having a styrene structure include copolymers of a monomer having a styrene structure and a different monomer. Examples of the monomer having a styrene structure include styrene-based monomers such as styrene, methylstyrene and vinyltoluene. Examples of the different monomer other than the styrene-based monomers include aliphatic olefins such as ethylene, propylene, α-olefin, butadiene and isoprene. The resin having a styrene structure may be a resin in which an unsaturated bond remaining after polymerization is reduced or saturated by hydrogenation. The proportion of the styrene-based monomer in the resin having a styrene structure may be, for example 10 to 50 wt% and is preferably 20 to 50 wt% and more preferably 30 to 50 wt%.

The resin having a styrene structure may be a styrene-based elastomer. In a case where the resin having a styrene structure in the adhesive layer 12 is a styrene-based elastomer, the adhesive layer preferably contains 3 to 30 parts by weight and more preferably 5 to 25 parts by weight of the styrene-based elastomer in 100 parts by weight of the total amount of the adhesive layer 12.

Examples of the styrene-based elastomer that is used in the adhesive layer 12 include one or more of a styrene-ethylene-propylene-styrene block copolymer (SEPS), a styrene-ethylene-butylene-styrene block copolymer (SEBS), a styrene-butadiene-styrene block copolymer (SBS), a styrene-isoprene-styrene block copolymer (SIS), a styrene-isoprene-butadiene-styrene block copolymer (SIBS), a styrene-ethylene-butylene-olefin crystal block copolymer (SEBC), hydrogenated styrene-butadiene rubber (HSBR) and the like. In the styrene-based elastomer, a block containing styrene configures a hard block or a block containing an aliphatic olefin configures a soft block.

Examples of the resin having a cyclic hydrocarbon structure include copolymers of a monomer having a cyclic hydrocarbon structure and a different monomer. The monomer having a cyclic hydrocarbon structure may be a monomer having a styrene structure or a monomer having a norbornene structure and may be, additionally, a monomer having an alicyclic hydrocarbon structure or an aromatic hydrocarbon structure. Examples of a monomer having a cyclic hydrocarbon structure other than a styrene structure or a norbornene structure include indene, allylbenzene, cycloolefin and the like. Examples of the different monomer having no cyclic hydrocarbon structures include aliphatic olefins such as ethylene, propylene, α-olefin, butadiene and isoprene.

At least a part of the resin having a cyclic hydrocarbon structure may be the resin having a styrene structure. The resin having a cyclic hydrocarbon structure may be a resin having no styrene structures. At least a part of the resin having a cyclic olefin resin may be a cyclic olefin resin. The resin having a cyclic hydrocarbon structure may not contain a cyclic olefin resin. The resin having a cyclic hydrocarbon structure may be, for example, a C5-C9 petroleum resin, a C9 petroleum resin or the like.

The adhesive layer 12 may contain a thermoplastic elastomer resin. For example, the thermoplastic elastomer resin may be an olefin-based elastomer. Examples of an olefin-based copolymer that can be used as the olefin-based elastomer include aliphatic olefin copolymers such as a propylene-ethylene copolymer, an ethylene-1-butene copolymer, an ethylene-1-hexen copolymer, an ethylene-1-octene copolymer, a propylene-ethylene-1-butene copolymer and a propylene-1-butne copolymer. The adhesive layer 12 may contain the thermoplastic elastomer resin to an extent of 1 to 30 parts by weight in 100 parts by weight of the total amount of the adhesive layer.

In a case where the second adhesive layer 13 is laminated on the adhesive layer 12, it is possible to use a desired adhesive resin as long as the second adhesive layer 13 can be laminated on the adhesive layer 12. The adhesive resin is not particularly limited, and examples thereof include an acid-modified polyolefin, an epoxy-based adhesive, an olefin-based heat sealant and the like. The second adhesive layer 13 may contain two or more adhesive resins or may contain a resin component other than adhesive resins.

Each layer configuring the adhesive films 10, 20 and 30, that is, the heat-resistant layer 11, the adhesive layer 12 or the second adhesive layer 13, may contain a variety of additives, such as an antioxidant, an ultraviolet absorber, an antistatic agent, a lubricant and an anti-blocking agent, or the like for a desired purpose. Any layer of the heat-resistant layer 11, the adhesive layer 12 and the second adhesive layer 13 may be a composition not containing any one or more or all of these additives.

A method for producing the adhesive films 10, 20 and 30 is not particularly limited, and examples thereof include methods in which each layer is formed or laminated by extrusion molding, inflation molding, thermal lamination, extrusion lamination, dry lamination or the like. For example, at the time of producing the adhesive film 10 or 20 having the heat-resistant layer 11 and the adhesive layer 12, the heat-resistant layer 11 may be molded first, the adhesive layer 12 may be molded first or the heat-resistant layer 11 and the adhesive layer 12 may be molded at the same time.

A first example of the production method has a step of melt-kneading a material of the heat-resistant layer 11 with a melt extruder and making the heat-resistant layer 11 into a film by extrusion molding and a step of melt-kneading a material of the adhesive layer 12 with the melt extruder and laminating the adhesive layer 12 on at least one surface of the heat-resistant layer 11 by extrusion lamination. According to the first example of the production method, since the heat-resistant layer 11 is more heat-resistant than the adhesive layer 12, production is easy compared with a case where the adhesive layer 12 is molded first and then the heat-resistant layer 11 is extrusion-laminated thereon. In addition, in the first example, the adjustment of the film thickness or the like of each layer is easy compared with a second example to be described below. In addition, in the first example, since the adhesive layer 12 is laminated on the heat-resistant layer 11 in a molten state, the adhesiveness between the layers improves compared with a third example to be described below.

The second example of the production method has a step of melt-kneading individual materials of the heat-resistant layer 11 and the adhesive layer 12 with an extruder and extrusion-molding the materials at the same time to make the heat-resistant layer 11 and the adhesive layer 12 into a film in a state where the adhesive layer 12 is laminated on at least one surface of the heat-resistant layer 11. According to the second example of the production method, the extrusion molding is completed by one step and the operation is shortened compared with the above-described first example and the third example to be described below. In addition, since the heat-resistant layer 11 and the adhesive layer 12 are laminated in a molten state, the adhesiveness between the layers improves.

The third example of the production method has a step of melt-kneading a material of the heat-resistant layer 11 with an extruder and making the heat-resistant layer 11 into a film by extrusion molding, a step of melt-kneading a material of the adhesive layer 12 with the extruder and making the adhesive layer 12 into a film by extrusion molding, and a step of laminating the adhesive layer 12 on at least one surface of the heat-resistant layer 11 by pressing with a heat roll. According to the third example of the production method, since the heat-resistant layer 11 and the adhesive layer 12 are molded separately and can be laminated in a desired combination as necessary, a design change or production management becomes easy. The order of making the heat-resistant layer 11 into a film and making the adhesive layer 12 into a film is not particularly limited, and both steps can be performed in parallel at the same time.

A fourth example of the production method has a step of melt-kneading a material of the heat-resistant layer 11 with an extruder and making the heat-resistant layer 11 into a film by extrusion molding and a step of dissolving a material of the adhesive layer 12 in a solvent, applying the material onto the heat-resistant layer 11, and drying the solvent to laminate the adhesive layer 12. According to the fourth example of the production method, the adjustment of the thickness of the adhesive layer 12 is easy, and it is also possible to form a thin-film adhesive layer 12 even when the thin film is difficult to form by melt-kneading.

In a case where the adhesive layers 12 are provided on both surface of the heat-resistant layer 11, the adhesive layer 12 on each surface may be laminated on the heat-resistant layer 11 by the same method or may be laminated on the heat-resistant layer 11 by a different method. Both surfaces of the adhesive layer 12 may be resin layers having a different composition or thickness or may be resin layers having the same composition or thickness. The thicknesses of the heat-resistant layer 11 and the adhesive layer 12 are not particularly limited, and the thickness of each layer of the heat-resistant layer 11 and the adhesive layer 12 is, for example, approximately 1 to 300 µm. The thicknesses of the adhesive films 10, 20 and 30 are not particularly limited and are, for example, approximately 10 to 500 µm.

At the time of producing the adhesive film 30 having the second adhesive layer 13, the adhesive layer 12 may be molded earlier than the second adhesive layer 13, the second adhesive layer 13 may be molded earlier than the adhesive layer 12 or the adhesive layer 12 and the second adhesive layer 13 may be molded at the same time. A method for forming the second adhesive layer 13 is not particularly limited and may be the same as the method for molding the adhesive layer 12 or may be a different method from the adhesive layer 12. In the above-described first to third examples of the production method, the second adhesive layer 13 may be formed in the same manner as the adhesive layer 12.

An adherend of the adhesive films 10, 20 and 30 is not particularly limited, and examples thereof include a variety of materials such as resins, rubber, metals, glass and ceramics. The adhesive layer 12 contains the modified polyolefin resin as an essential component and is thus capable of preferably adhering to an adherend even when the adherend is a metal or the like. The metal is not particularly limited, and examples thereof include iron, copper, aluminum, stainless steel, chromium, nickel and the like. The surface of the adherend may have a treated surface on which a surface treatment, such as embossing or a chemical conversion treatment, has been performed.

The present invention includes the following aspects.
[A1] An adhesive film having an adhesive layer on at least one surface of a heat-resistant layer,
   in which the heat-resistant layer contains a thermoplastic resin having an aromatic ring in a monomer unit as an essential component,
   a heat deflection temperature of the heat-resistant layer is 100°C or higher and 260°C or lower,
   the adhesive layer contains a modified polyolefin resin as an essential component and, furthermore, contains at least one resin having a styrene structure or a cyclic hydrocarbon structure, and
   a total of 3 to 50 parts by weight of the at least one resin having a styrene structure or a cyclic hydrocarbon structure is contained in 100 parts by weight of the adhesive layer.
[A2] An adhesive film having an adhesive layer on at least one surface of a heat-resistant layer,
   in which the heat-resistant layer contains a thermoplastic resin having an aromatic ring in a monomer unit as an essential component,
   a heat deflection temperature of the heat-resistant layer is 100°C or higher and 200°C or lower,
   the adhesive layer contains a modified polyolefin resin as an essential component and, furthermore, contains a resin having a styrene structure, and
   a total of 5 to 30 parts by weight of the resin having a styrene structure is contained in 100 parts by weight of the adhesive layer.
[A3] The adhesive film according to [A1] or [A2], in which the modified polyolefin resin is a modified polyethylene resin or a modified polypropylene resin.

Hitherto, the present invention has been described based on the preferable embodiment, but the present invention is not limited to the above-described embodiment and can be modified in a variety of ways within the scope of the gist of the present invention.

### [Examples]

Hereinafter, the present invention will be specifically described using examples.

### (Resins used)

The following resins were used for heat-resistant layers and adhesive layers. The compositions of the resins are shown in Table 1, and the numerical values of blending ratios are added to the right of the reference signs of the following components in the unit of "parts by weight." For example, "A-1 100" indicates that A-1 was used in a proportion of 100 parts by weight.

"A-1" is a PPE/PS resin (polymer alloy of PPE and PS) and has an HDT of 158°C (load: 1.8 MPa). Here, the polyphenylene ether (PPE) resin is poly(2,6-dimethyl-p-phenylene ether).

"A-2" is a PPS resin (polymer alloy of PPE and PS) and has an HDT of 105°C (load: 1.8 MPa). Here, the polyphenylene sulfide (PPS) resin is poly(p-phenylene sulfide).

"A-3" is a PS resin and has an HDT of 70°C (load: 1.8 MPa).

"A-4" is a PP resin and has an HDT of 60°C (load: 1.8 MPa).

"B-1" is a styrene-containing resin (SEBS) and has a styrene content percentage of 43% and an MFR of 3.0 g/10 min (230°C, 2.16 kg).

"C-1" is an acid-modified polypropylene (PP), has a melting point of 140°C and an MFR of 7.0 g/10 min (230°C, 2.16 kg) and contains 0.08 parts by weight of an unsaturated carboxylic acid component in 100 parts by weight of the acid-modified polypropylene.

"C-2" is an acid-modified polyethylene (PE), has a melting point of 120°C and an MFR of 6 g/10 min (230°C, 2.16 kg) and contains 0.1 parts by weight of an unsaturated carboxylic acid component in 100 parts by weight of the acid-modified polystyrene.

"D-1" is a styrene-containing resin (SEBS) and has a styrene content percentage of 43% and an MFR of 3.0 g/10 min (230°C, 2.16 kg).

### (Method for producing adhesive films of Examples 1 to 4 and Comparative Example 3)

According to a composition shown in Table 1, a resin for a heat-resistant layer and a resin for an adhesive layer were dry-blended as pellets with a mixer. The resin for the heat-resistant layer and the resin for the adhesive layer were each melt-kneaded at 320°C for two minutes and at 270°C for two minutes, and then an adhesive film having a predetermined thickness was obtained by two-layer simultaneous extrusion molding. In Table 1, a method by this two-layer simultaneous extrusion molding is expressed as "P-1."

### (Method for producing adhesive film of Example 5)

According to a composition shown in Table 1, a resin for a heat-resistant layer and a resin for an adhesive layer were dry-blended as pellets with a mixer. The resin for the heat-resistant layer was melt-kneaded at 320°C for two minutes, and then a film for the heat-resistant layer was obtained by extrusion molding. Next, the resin for the adhesive layer was melt-kneaded at 270°C for two minutes and then laminated on the film for the heat-resistant layer by extrusion lamination, thereby obtaining an adhesive film having a predetermined thickness. In Table 1, a method by this extrusion lamination is expressed as "P-2."

### (Method for producing adhesive films of Examples 6 and 7 and Comparative Examples 1 and 2)

According to a composition shown in Table 1, a resin for a heat-resistant layer and a resin for an adhesive layer were dry-blended as pellets with a mixer. The resin for the heat-resistant layer was melt-kneaded at 320°C for two minutes, and then a film for the heat-resistant layer was obtained by extrusion molding. Next, the resin for the adhesive layer was melt-kneaded at 270°C for two minutes, and then a film for the adhesive layer was obtained by extrusion molding. The obtained film for the heat-resistant layer and the obtained film for the adhesive layer were overlapped and heated and pressed at 270°C with a heat roll, thereby obtaining an adhesive film having a predetermined thickness. In Table 1, a method by this thermal lamination is expressed as "P-3."

### (Method for measuring adhesive force)

An adhesive film in which the thickness of the heat-resistant layer was set to 80 µm, the thickness of the adhesive layer was set to 20 µm and the total thickness was set to 100 µm was used as a sample. An aluminum foil having a thickness of 50 µm was used as an adherend. This was cut into sizes of 50 mm × 50 mm, and the adherend was overlaid on the sample and heated and pressed from the adherend side under conditions of a temperature of 170°C, a pressure of 0.1 MPa and a time of 10 seconds. Furthermore, the sample was cut to be 15 mm in width, and then the adhesive strength of the sample onto which the adherend had been heated and pressed was measured using a tensile tester (Shimadzu Corporation, trade name: AUTOGRAPH (registered trademark) AG-X20kN) by a 180° peeling method under conditions of a speed of 300 mm/min, a width of 15 mm and a measurement temperature of 110°C.

### (Method for measuring creep amount by compression creep test)

An adhesive film in which the thickness of the heat-resistant layer was set to 80 µm, the thickness of the adhesive layer was set to 20 µm and the total thickness was set to 100 µm was used as a sample. The sample was cut into sizes of 30 mm × 30 mm, and 100 pieces were overlapped. The percentage of the thickness of the sample that decreased when the original thickness was regarded as 100% was measured using a creep tester (A&D Company, Limited, trade name: CP6-L-250) under conditions of a pressure of 2 MPa, a temperature of 100°C and a time of 10 minutes. In Table 1, in a case where the decrease in the thickness was less than 10%, "< 10" is expressed, and, in a case where the decrease in the thickness exceeded 10%, "> 10" is expressed.

### (Results)

The above-described results are summarized in Table 1.

**[Table 1]**

| | Heat-resistant layer (component blending ratio) | | Adhesive layer (component blending ratio) | | Method | Adhesive strength (N/15 mm) | Creep amount (%) | Heat-resistant layer HDT (°C) |
|---|---|---|---|---|---|---|---|---|
| Example 1 | A-1 100 | - | C-1 90 | D-1 10 | P-1 | 5 | < 10 | 158 |
| Example 2 | A-1 100 | - | C-2 90 | D-1 10 | P-1 | 4 | < 10 | 158 |
| Example 3 | A-1 80 | B-1 20 | C-1 90 | D-1 10 | P-1 | 5 | < 10 | 120 |
| Example 4 | A-1 100 | - | C-1 80 | D-1 20 | P-1 | 4 | < 10 | 158 |
| Example 5 | A-1 100 | - | C-1 90 | D-1 10 | P-2 | 4 | < 10 | 158 |
| Example 6 | A-1 100 | - | C-1 90 | D-1 10 | P-3 | 4 | < 10 | 158 |
| Example 7 | A-2 100 | - | C-1 90 | D-1 10 | P-3 | 4 | < 10 | 105 |
| Comparat ive Example 1 | A-3 100 | - | C-1 90 | D-1 10 | P-3 | 3 | > 10 | 70 |
| Comparat ive Example 2 | A-4 100 | - | C-1 90 | D-1 10 | P-3 | 5 | > 10 | 60 |
| Comparat ive Example 3 | A-1 100 | - | C-1 100 | - | P-1 | 2 | < 10 | 158 |

It was found that the adhesive films of Examples 1 to 7 had a high adhesive strength and a small creep amount even at high temperatures and were thus capable of satisfying both adhesiveness to the adherend and dimension retentiveness of the adhesive film.

In the adhesive films of Comparative Examples 1 and 2, the adhesiveness of the adhesive layers to the adherends was sufficient, but the heat resistance of the heat-resistant layers was not sufficient, and thus the creep amount due to compression became large.

In the adhesive film of Comparative Example 3, the adhesiveness of the adhesive layer to the adherend was sufficient, but the adhesiveness between the heat-resistant layer and the adhesive layer was not sufficient, and thus the adhesive strength at a high temperature became weak.

### [Reference Signs List]

10, 20, 30 Adhesive film
11 Heat-resistant layer
12 Adhesive layer
13 Second adhesive layer

## Claims

1. An adhesive film, comprising:
an adhesive layer on at least one surface of a heat-resistant layer,
wherein the heat-resistant layer contains a thermoplastic resin having an aromatic ring in a monomer unit as an essential component,
a heat deflection temperature of the heat-resistant layer is 100°C or higher, and
the adhesive layer contains a modified polyolefin resin as an essential component and, furthermore, contains at least one resin having a styrene structure or a cyclic hydrocarbon structure.

2. The adhesive film according to Claim 1,
wherein a total of 3 to 50 parts by weight of the at least one resin having a styrene structure or a cyclic hydrocarbon structure is contained in 100 parts by weight of the adhesive layer.

3. The adhesive film according to Claim 1 or 2,
wherein the modified polyolefin resin in the adhesive layer is modified with an unsaturated carboxylic acid component, and 0.01 to 2 parts by weight of the unsaturated carboxylic acid component is contained in 100 parts by weight of the modified polyolefin resin.

4. The adhesive film according to any one of Claims 1 to 3,
wherein a thermoplastic resin other than the thermoplastic resin having an aromatic ring in a monomer unit is contained in 100 parts by weight of the heat-resistant layer to an extent of 1 to 30 parts by weight.

5. The adhesive film according to any one of Claims 1 to 4,
wherein the modified polyolefin resin is a modified polyethylene resin or a modified polypropylene resin.

6. The adhesive film according to any one of Claims 1 to 5,
wherein a thermoplastic elastomer resin is contained in 100 parts by weight of the adhesive layer to an extent of 1 to 30 parts by weight.

7. The adhesive film according to any one of Claims 1 to 6,
wherein a second adhesive layer that is caused to adhere to an adherend of the adhesive film is provided on the adhesive layer.

8. A method for producing an adhesive film that is the adhesive film according to any one of Claims 1 to 7, the method comprising:
a step of melt-kneading a material of the heat-resistant layer with a melt extruder and making the heat-resistant layer into a film by extrusion molding; and
a step of melt-kneading a material of the adhesive layer with the melt extruder and laminating the adhesive layer on at least one surface of the heat-resistant layer by extrusion lamination.

9. A method for producing an adhesive film that is the adhesive film according to any one of Claims 1 to 7, the method comprising:
a step of melt-kneading individual materials of the heat-resistant layer and the adhesive layer with an extruder and extruding the materials at the same time to make the heat-resistant layer and the adhesive layer into a film in a state where the adhesive layer is laminated on at least one surface of the heat-resistant layer.

10. A method for producing an adhesive film that is the adhesive film according to any one of Claims 1 to 7, the method comprising:
a step of melt-kneading a material of the heat-resistant layer with an extruder and making the heat-resistant layer into a film by extrusion molding;
a step of melt-kneading a material of the adhesive layer with the extruder and making the adhesive layer into a film by extrusion molding; and
a step of laminating the adhesive layer on at least one surface of the heat-resistant layer by pressing with a heat roll.

11. A method for producing an adhesive film that is the adhesive film according to any one of Claims 1 to 7, the method comprising:
a step of melt-kneading a material of the heat-resistant layer with an extruder and making the heat-resistant layer into a film by extrusion molding; and
a step of dissolving a material of the adhesive layer in a solvent, applying the material onto the heat-resistant layer, and drying the solvent to laminate the adhesive layer.
